# EUROPEAN PATENT APPLICATION

(11) **EP 2 067 999 A1**
(43) Date of publication of application: **10.06.2009**
(21) Application number: 07023693.0
(22) Date of filing: 06.12.2007
(51) Int. Cl.: F04D 17/08, F04D 29/58, F04D 29/28

(54) **Liquid cooled turbocharger impeller and method for cooling an impeller**

(71) Applicant: Napier Turbochargers Limited, Lincoln Lincolnshire LN5 7FD (GB)
(72) Inventor: Kay, Peter, LN5 0TP Navenby Lincoln (GB)
(74) Representative: Gill, Stephen Charles

(57) **Abstract**

A compressor (110) comprising a casing (1) and an impeller (12) with a back side (16) is disclosed. The casing (1) comprises at least one inlet (21, 22, 23) which is connected to a cooling liquid supply and located such as to lead a cooling liquid to the back side (16). Moreover, a turbocharger comprising an inventive compressor (110) is described. Furthermore, a method for cooling an impeller (12) with a back side (16) is disclosed, wherein a cooling liquid is led to the back side (16).

## Description

The present invention relates to a compressor, a turbocharger, and a method for cooling an impeller.

Turbochargers on diesel engines are required to operate at increasing pressure ratios. This increases the impeller's operating rotational speed and temperature and decreases the operating life of the turbocharger. In this case it is difficult to seal the impeller's gas exit area.

Impellers are typically made from grades of aluminium having defined fatigue and creep lives. The increase of operating temperature causes a significant decrease of operating life. Moreover, the rotational speeds are increasing and as a consequence also the impeller loadings are increasing.

Effective sealing of the passageways at the impeller's exit also becomes more difficult with increasing impeller speed and exit pressure ratio. Any leakage of air from the tip of the impeller decreases the impeller's, and hence the turbocharger's, efficiency. To minimise the leakage of air from the impeller's tip elaborate sealing mechanisms are often employed. Typically labyrinth seals are used at the periphery of the impeller. With increasing impeller exit pressures, and consequentially raised operating temperatures this task becomes more important. The increased operating temperatures make the relative seal movement due to thermal growth greater.

Any leakage of compressed air increases the air pressure on the back side of the impeller. This increases the thrust loads applied to the turbocharger's bearing system resulting in larger bearings and inevitable power losses, and further decreases the efficiency of the turbocharger. Typically this air is bled away from the area behind the impeller to the turbocharger's turbine exhaust to where it is used to seal and cool turbine exhaust gas passageways and components.

Appreciating that the air temperature is only high in the high pressure region near the impeller vanes exit, it also means that any leakage will be at this elevated temperature. Thus leakage also has the effect of further increasing the temperature of the impeller.

In US 5,297,928 and US 6,190,123 B1 methods for direct cooling the rear wall of a compressor impeller are disclosed, wherein a gaseous cooling medium is directed onto the rear wall.

In US 6,257,834 B1 a method for indirect cooling of the flow in radial gaps formed between rotors and stators of turbo machines is provided. The method includes the step of using water as a cooling fluid for stator part adjacent to the radial gap.

In WO 01/29425 A1 a combination of direct and indirect cooling of the flow in radial gaps formed between rotors and stators of turbine-type machines is disclosed, wherein a first cooling fluid, preferably water, is used for indirect cooling and a second gaseous cooling fluid, preferably air, is used for direct cooling.

It is an objective of the present invention to provide an advantageous compressor. A second objective is to provide an advantageous turbocharger. It is a third objective to provide an advantageous method for cooling an impeller.

The first objective is solved by a compressor, as claimed in claim 1. The second objective is solved by a turbocharger, as claimed in claim 8. The third objective is solved by a method, as claimed in claim 11. The depending claims define further developments of the invention.

The inventive compressor comprises a casing and an impeller with a back side. The casing comprises at least one inlet which is connected to a cooling liquid supply and which is located such as to lead a cooling liquid to the back side of the impeller. Leading a cooling liquid to the back side of the impeller reduces the temperature of the impeller and thus decreases fatigue and increases creep life and efficiency for any given operating point.

The impeller may comprise a number of vanes at its front side each vane comprising a tip which resembles the trailing edge. Advantageously the casing comprises at least one inlet at a first location near the tip of the vanes. The tip of the vanes is considered to be the hottest area of the impeller, thus cooling the tip has a great effect.

Moreover, the impeller can comprise a seal at the periphery of the back side of the impeller, and the casing may comprise at least one inlet at a second location near the seal. Also the periphery of the back side can be considered as a very hot area, which means that cooling the area at the seal also provides an advantageous cooling effect.

Furthermore, the impeller may comprise at least one inlet at a third location between the seal and a rotation axis of the impeller.

The casing can comprise at least one outlet for bleed air and cooling liquid which is located opposite to the back side of the impeller. Any air leaking through the seal, which can e.g. be a labyrinth seal, can escape through this outlet and can be used for turbocharger cooling purposes.

The cooling liquid supply which is connected to the inlet can, for example, be a water supply. Instead of water any other "flashing" media can be used to cool the back side of the impeller. The high heat transfer coefficient between the used liquid and the hot impeller material, which may be aluminium, would cause the liquid to evaporate (or flash-off) when it comes in contact with the impeller and, hence, to remove heat through evaporation. This reduces the temperature of the impeller. Because the heat transfer rate between the gas, for instance air, and the impeller on the front side of the impeller is negligible compared to the heat transfer rate between the liquid and the impeller, the required liquid mass rate of injection can be of the order of only a few tenths of one percent of the mass flow rate of the gas being compressed.

Advantageously, the cooling liquid supply can be further connected to a cooler box of the engine in which the inventive compressor is used. In such a cooler box pressurised air may be collected from the compressor and cooled. Because of the typical air conditions in such a cooler box the air becomes wet and condensate will be formed.
This condensate can be separated and may provide an ideal supply of "flash-off" liquid. This "flash-off" liquid is reasonably free of contaminants and may be pressurised at about 40% greater pressure than at the back of the impeller.
Thus it could be passed through a filter if required, at nil, or very little, running cost.

The inventive turbocharger comprises an inventive compressor, as previously described. The turbocharger may, for example, comprise a compressor with a casing which comprises at least one outlet for bleed air and cooling liquid located opposite the back side of the impeller. The outlet may advantageously be connected to another component of the turbocharger, for instance, a component of the turbocharger's turbine to provide a cooling liquid supply. Generally, the inventive turbocharger shares the advantages the inventive compressor has.

The inventive method for cooling an impeller with a back side is characterised in that a cooling liquid is led to the back side of the impeller. This method allows for effectively cooling the impeller. The impeller may comprise a number of vanes at its front side, each vane comprising a tip. The cooling liquid can be led to the back side of the impeller such that it impinges the back side at a location near the tip. This provides an effective cooling of the impeller near the tip of the vanes, where the compressed air - and hence the impeller - reaches its highest temperature.

Alternatively or additionally the impeller may comprise a seal at the periphery of its back side. Then the cooling liquid may be led to the back side such that it impinges the seal. Because a fraction of the hot compressed air leaks to the seal, also the temperature of the seal and also of the impeller's back side near the seal considerably increases.
The inventive method provides an effective means for cooling this area. The seal may for example be labyrinth seal.

Advantageously water is used as cooling liquid. In particular, condensed water from a cooler box, where compressed air is cooled, can be used as cooling liquid. The cooler box may, for example, be a part of the engine in which a turbocharger is used. The high heat transfer coefficient between the liquid and the hot impeller material, which may for example be aluminium, can cause the liquid to evaporate (or flash-off) when it comes in contact with the impeller and thus reduces the impeller's temperature. Because the heat transfer rate between the compressed air and the impeller on the front side is negligible compared to the heat transfer between the impeller's back side and the liquid, the required liquid mass rate of injection can be of the order of only a few tenths of one percent of the mass flow rate of the air being compressed.

Generally, instead of air any other gas may be compressed by means of the inventive compressor. The impeller which is cooled by means of the inventive method would not thermally expand as much as other impellers, enabling operating labyrinth seal clearances to be reduced. This effectively reduces leakage. Consequently it decreases the fatigue and increases creep life and efficiency for any given operating point of the impeller.

After cooling the impeller the cooling liquid may be used to cool another component. This component may, for example, be another component of a turbocharger, for instance a component of a turbine.

Further features, properties, and advantages of the present invention will become clear from the following description of an embodiment in conjunction with the accompanying drawings.
- Fig. 1: schematically shows a turbocharger in a sectional view.
- Fig. 2: schematically shows part of an inventive compressor in a sectional view.

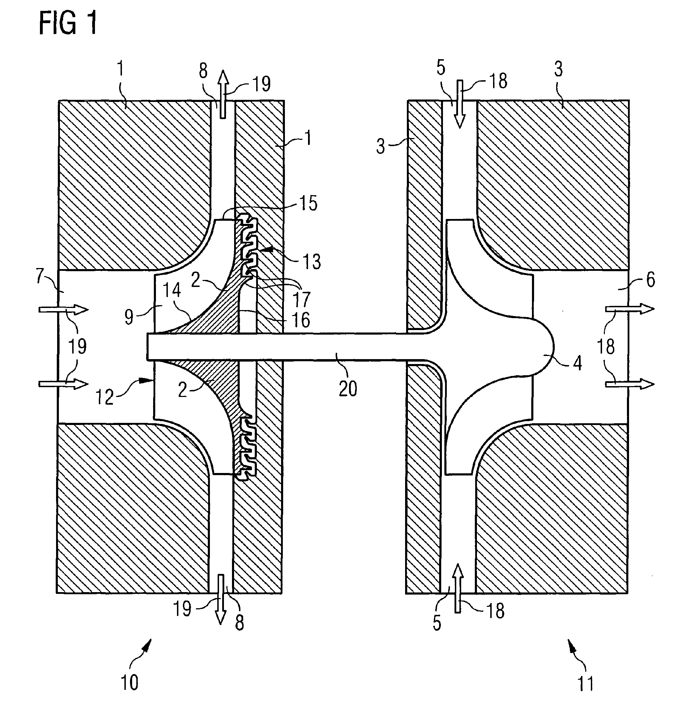

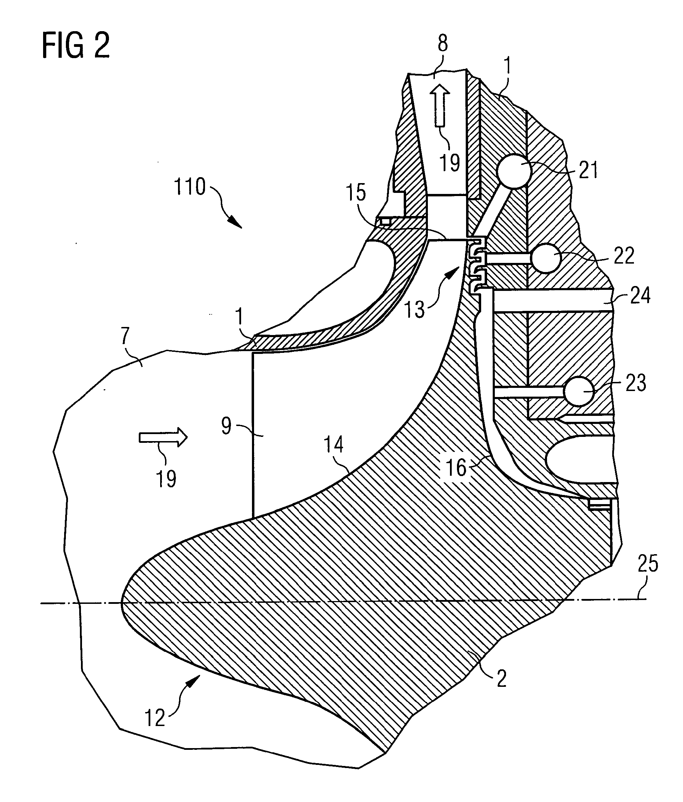

In the following embodiment the inventive compressor and the inventive turbocharger will be described with reference to figures 1 and 2. Figure 1 schematically shows a turbocharger in a sectional view. The turbocharger comprises a turbine 11 and a compressor 10. The turbine 11 and the compressor 10 are connected by a shaft 20 to rotate in common.

The turbine 11 includes a rotor 4 which is located inside a turbine casing 3. The turbine casing 3 has an exhaust inlet 5 which leads to the rotor 4 so that the exhaust gas of a motor, which is equipped with the turbocharger, entering the exhaust inlet 5 activates the rotor 4. Further the turbine casing 3 has an exhaust outlet 6 through which the exhaust coming from the rotor 4 leaves the turbine casing 3 towards an exhaust. The arrows 18 indicate the exhaust stream entering the turbine casing 3 through the exhaust inlet 5, activating the rotor 4 and leaving the turbine casing 3 through the exhaust outlet 6.

The compressor 10 includes an impeller 12 which is located inside a compressor casing 1. Moreover, the compressor 10 has an air inlet 7 through which air is led to the impeller 12 and an air outlet 8 through which the air coming from the impeller 12 leaves the compressor casing 1. The arrows 19 indicate the air stream entering the compressor casing 1 through the air inlet 7, being compressed by the impeller 12 and leaving the compressor casing 1 through the air outlet 8.

The impeller 12 comprises a number of vanes 9 at its front side 14. The back side 16 of the impeller 12 has radially spaced and axially extended ribs 17 which extend towards the compressor casing 1 and which form a labyrinth seal 13 together with the ribs 17 in the compressor casing 1 which extend towards the back side 16 of the impeller 12 so as to mesh with the impeller's ribs 17. The labyrinth seal 13 reduces the leakage of compressed air towards the bearings along the back side 16 of the impeller 12.

The impeller 12 is connected to the shaft 20 by a hub 2. From the hub 2, which is generally conical in shape, a plurality of circumferentially spaced arcuate vanes 9 extend to the impeller's periphery. At the outer section of the impeller 12, measured radially from the shaft 20, the tip 15 is located.

The rotor 4 of the turbine 11 is connected to the shaft 20 so that the activated rotor 4 activates the shaft 20. The shaft 20 is further connected to the impeller 12 inside the compressor 10. Hence, the rotor 4 activates the impeller 12 by means of the shaft 20.

In operation of the turbocharger, the exhaust stream 18 entering the exhaust inlet 5 of the turbine activates the rotor 4 and leaves the turbine through the exhaust outlet 6. The arrows 18 indicate the direction of the exhaust stream. Meanwhile, the impeller 12 in the compressor 10 driven by the rotor 4 sucks atmospherically fresh air into the air inlet 7 and compresses it to precompressed fresh air, which enters the air outlet 8. The compressed air is then used for example in a reciprocating engine like e.g. a diesel engine.
The arrows 19 indicate the air stream direction.

Figure 2 schematically shows part of an inventive compressor 110 in a sectional view. Elements corresponding to elements in figure 1 are designated with the same reference numerals and are not described again in detail. In contrast to a standard compressor 10, as it is shown in figure 1, the compressor 110 in figure 2 comprises a casing 1 with three inlets 21, 22, 23 and one outlet 24, which are located in the compressor casing 1 opposite to the back side 16 of the impeller 12. The rotation axis of the impeller 12 is indicated by reference numeral 25.

A first inlet 21 is placed in the compressor casing 1 at a location near the tip 15 of the vanes 9. A second inlet 22 is situated at a location near the seal 13 and a third inlet 23 is placed in the casing 1 at a location between the seal 13 and the rotation axis 25 of the impeller 12.

Generally, the compressor 110 can comprise one of these different types of inlets 21, 22, 23, two of these different types of inlets 21, 22, 23, or all three different types of inlets 21, 22, 23. The inlets 21, 22, 23 may be connected to a cooling liquid supply, for instance a water supply.

If water or any other cooling liquid is injected through the inlet 21, this water impinges on or very near the impeller's outer diameter. This position is regarded as being "safe", in as much as if any water did not "flash-off", it would be transported via the turbocharger's air flow into the engine's cooler box. The cooler box is typically connected to the outlet 8 for compressed air and is used for cooling the compressed air. Once in the cooler box the water would be separated and collected with the rest of the air's condensate. Nevertheless, the air flow through the compressor 10 would be dry enough to absorb the water as a gas rather than transport any non-flashed water as a wet mixture which could cause corrosions or erosions. The portion of the impeller 12 opposite to which the inlet 21 is located can be considered to be the hottest area of the impeller 12. The temperature of the surface of the impeller 12 in this area is assumed to be 200° C and more. Thus, cooling has the greatest effect in this area.

If water or any other cooling liquid is injected through the inlet 22, then the labyrinth seal 13 is maximally cooled.
Because of the inevitability of all the water coming in contact with the impeller 12, the portion of the impeller 12 where the seal 13 is located can be regarded as the position which guarantees maximum heat removal from the impeller 12 to the water or to the used cooling liquid. However, it is also regarded as the position where any possibly adverse effect of the water impingement upon the impeller 12 would take place. The temperature of the surface of the impeller 12 at the position where the inlet 22 is located is assumed to be 200° C.

If the water or any other cooling liquid is injected through the inlet 23, the water hits the rear of the impeller 12 and heat is removed from the impeller 12 caused by an evaporating of the water. However, this area of the impeller 12 is known to be not as hot as the area where the seal 13 or the tip 15 is located. The temperature of the surface of the impeller 12 at the position where the inlet 23 is located is assumed to be 170° C. However, the area where the seal 13 or the tip 15 is located can also indirectly be cooled by injecting water through the inlet 23 onto the impeller material. Instead of water also any other cooling liquid or any other "flashing" media can be used to impinge on the back face 16 of the impeller 12. The high heat transfer coefficient between the liquid and the hot impeller material, for instance aluminium, would cause the liquid to evaporate when it comes in contact with the impeller and thus reduces the impeller's temperature very efficiently.

Generally, the consequences of having "wetter", and hence denser, air escape from the back side 16 of the impeller 12 via the outlet 24 is regarded as beneficial. Although the bleed air will contain more heat than normal, being denser the heat removing capacity is still greatly increased as it passes, for example, through the exceedingly hot turbocharger turbine components, which may have a temperature of 500° C and more. Thus it would be expected to improve the cooling of these components also. By this means also the operating lives of these components are increased.

The inventive compressor further comprises a source of "flash-off" liquid. Because of the typical air conditions in the engine's cooler box, where the pressurised air is collected from the turbocharger and cooled, condensate will be formed. This condensate can be separated and can provide an ideal supply of the evaporating "flash-off" liquid. This "flash-off" liquid is reasonably free of contaminants and is pressurised at about 40% greater pressure than at the back side 16 of the impeller 12. This "flash-off" liquid can be passed through a filter, if required at nil or very little running costs.

Difficulties may occur if the "flash-off" media, or impurities contained within it, cause erosion or corrosion of the components to be cooled. For example, condensate in the cooler boxes of sea going vessels are sometimes contaminated with salt if the engines intake is not adequately screened. In such cases there are known solutions, e.g. hard anodised coatings, that have been successfully used, that could also be used to coat and protect the cooled impeller surfaces and surfaces in contact with the "flash-off" media.

The liquid flow can be regulated directly by the air pressure generated by the impeller 12. This means that it can be made self-regulating without the need to use a standard off-the-shelf dosing pump. A standard "crack-off valve", set to for instance 2.5 barg can for example be fitted in the line from the cooler box condensate, which may only open when the cooler box pressure is greater than 2.5 barg, and an orifice would, in principle, suffice.

In summary, the invention provides a means of cooling the impeller and its seal area during operation. The inventive cooling reduces the temperature of the impeller, reduces leakage and fatigue, and increases creep life and efficiency for any given operating point.

## Claims

1. A compressor (110) comprising a casing (1) and an impeller (12) with a back side (16),
wherein the casing (1) comprises at least one inlet (21, 22, 23) which is connected to a cooling liquid supply and located such as to lead a cooling liquid to the back side (16).

2. The compressor (110) as claimed in claim 1,
wherein the impeller (12) comprises a number of vanes (9) at its front side (14), each vane (9) comprising a tip (15), and the casing (1) comprises at least one inlet (21) at a first location near the tip (15) of the vanes (9).

3. The compressor (110) as claimed in claim 1 or 2,
wherein the impeller (12) comprises a seal (13) at the periphery of the back side (16) and the casing (1) comprises at least one inlet (22) at a second location near the seal (13).

4. The compressor (110) as claimed in any of the claims 1 to 3,
wherein the impeller (12) comprises a seal (13) at the periphery of the back side (16) and the casing (1) comprises at least one inlet (23) at a third location between the seal (13) and a rotation axis (25) of the impeller (12).

5. The compressor (110) as claimed in any of the claims 1 to 4,
wherein the casing (1) comprises at least one outlet (24) for bleed air and cooling liquid which is located opposite to the back side (16) of the impeller (12).

6. The compressor (110) as claimed in any of the claims 1 to 5,
wherein the cooling liquid supply is a water supply.

7. The compressor (110) as claimed in any of the claims 1 to 6,
wherein the cooling liquid supply is further connected to a cooler box in which pressurised air is cooled.

8. A turbocharger comprising a compressor (110) as claimed in any of the claims 1 to 7.

9. The turbocharger as claimed in claim 8 in conjunction with claim 5,
wherein the outlet (24) is connected to another component of the turbocharger to provide a cooling liquid supply.

10. The turbocharger as claimed in claim 9,
wherein it comprises a turbine (11) and the outlet (24) is connected to a component of the turbine (11).

11. A method for cooling an impeller (12) with a back side (16),
wherein a cooling liquid is led to the back side (16).

12. The method as claimed in claim 11,
wherein the impeller (12) comprises a number of vanes (9) at its front side (14), each vane (9) comprising a tip (15), and the cooling liquid is led to the back side (16) such that it impinges the back side (16) at a location near the tip (15).

13. The method as claimed in claim 11 or 12,
wherein the impeller (12) comprises a seal (13) at the periphery of its back side (16) and the cooling liquid is led to the back side (16) such that it impinges the seal (13).

14. The method as claimed in any of the claims 11 to 13,
wherein water is used as cooling liquid.

15. The method as claimed in claim 14,
wherein condensed water from a cooler box, where compressed air is cooled, is used as cooling liquid.

16. The method as claimed in any of the claims 11 to 15,
wherein after cooling the impeller (12) the cooling liquid is used to cool another component.

17. The method as claimed in claim 16,
wherein after cooling the impeller (12) the cooling liquid is used to cool another component of a turbocharger.

18. The method as claimed in claim 16 or 17,
wherein after cooling the impeller (12) the cooling liquid is used to cool a component of a turbine (11).
